# EUROPÄISCHE PATENTSCHRIFT

(11) **EP 3 517 822 B1**
(45) Veröffentlichungstag und Bekanntmachung des Hinweises auf die Patenterteilung: **14.10.2020**
(21) Anmeldenummer: 19151974.3
(22) Anmeldetag: 15.01.2019
(51) Int. Cl.: F16P 3/08

(54) **ZUHALTUNG MIT FREIGABESIGNAL**
INTERLOCK WITH ENABLE SIGNAL
GÂCHETTE À SIGNAL DE DÉBLOCAGE

(30) Priorität: 24.01.2018 DE 102018101601
(43) Veröffentlichungstag der Anmeldung: 31.07.2019
(73) Patentinhaber: K. A. Schmersal GmbH & Co. KG, 42279 Wuppertal (DE)
(72) Erfinder: Gerbracht, Tobias, 42369 Wuppertal (DE); Uhlenbrock, Christian, 58239 Schwerte (DE)
(74) Vertreter: Kalkoff & Partner Patentanwälte PartmbB

(56) Entgegenhaltungen:
- EP-A2- 1 473 427
- WO-A1-2014/016281
- WO-A2-2005/013488
- DE-A1- 2 928 507
- DE-A1- 10 252 025
- DE-A1-102009 059 050
- DE-A1-102013 205 920
- JP-A- 2004 156 312

## Beschreibung

Die Erfindung betrifft eine Zuhaltung, eine Sicherheitseinrichtung mit einer Zuhaltung und ein Verfahren zum Betrieb einer Zuhaltung. Insbesondere bezieht sich die Erfindung auf die Ausgabe eines Freigabesignals im geschlossenen Zustand einer Zuhaltung.

Bei Zuhaltungen handelt es sich um Sperr-Einrichtungen, die geöffnet oder geschlossen sein können. Im geschlossenen Zustand sperrt eine Zuhaltung beispielsweise ein bewegliches Element, bspw. eine Tür, gegenüber einem Anschlag, während das bewegliche Element und der Anschlag im geöffneten Zustand gegeneinander beweglich sind.

Sicherheitstechnische Zuhaltungen werden in der Sicherheitstechnik für den Maschinen- und Anlagenbereich eingesetzt, bspw. an beweglich trennenden Schutzeinrichtungen für Gefahrenbereiche, also bspw. an Schiebe- oder Drehtüren, Schutzgittern, Abdeckungen, etc. Eine sicherheitstechnische Zuhaltung dient dabei einerseits zum Sperren eines beweglichen Teils einer trennenden Schutzeinrichtung (bspw. Tür) gegenüber einem festen Teil (bspw. Türanschlag) oder einem anderen beweglichen Teil (bspw. Flügeltür). Andererseits kann eine mit einem Sensor ausgestattete sicherheitstechnische Zuhaltung ein Meldesignal über den geöffneten oder verschlossenen Zustand abgeben, sodass bspw. ein Betrieb einer Maschine nur dann ermöglicht wird, wenn der geschlossene Zustand der Zuhaltung an der beweglich trennenden Schutzeinrichtung sichergestellt ist. Weiter kann eine Zuhaltung auch über einen ansteuerbaren Aktor verfügen, der eine Ver- oder Entriegelung der Zuhaltung steuern kann, bspw. abhängig davon, ob aktuell eine Gefahr in dem abgesperrten Bereich droht oder nicht.

Die DE 10 2013 014 456 B4 beschreibt eine Schutzeinrichtung einer Maschine mit einer gegenüber einem Rahmen beweglichen Schutztür, an der ein Sicherheitsschalter angebracht ist. Der Sicherheitsschalter umfasst ein am Rahmen angeordnetes Schalterelement und einen an der Schutztür angeordneten Betätiger und ist mit einer Steuerung verbunden, welche die Maschine steuert. Das Schalterelement weist eine Eintrittsöffnung für das Einführen des Betätigers sowie ein bewegbares Sperrelement auf, das in ausgefahrener Position den Betätiger arretiert. Am Betätiger ist eine Spule vorgesehen, die im arretierten Zustand kontaktlos Signale mit einer Leseinduktivität im Schalterkopf austauschen kann. Wenn sich die Induktivität des Betätigers innerhalb eines Ansprechbereichs befindet, ist ein Signalaustausch möglich und der Sicherheitsschalter kann signalisieren, dass der Betätiger in den Schaltkopf eingeführt ist. Der Betätiger kann einen Abstimmkondensator, einen Transponderchip oder einen RFID-Tag aufweisen.

Die DE 102 52 025 A1 offenbart ein Schloss mit einem Gehäuse, einem Riegel und einer Zuhaltung zum Arretieren des Riegels in seiner Schließstellung, welche überdies eine Sensoreinrichtung zum Überwachen der Schließstellung des Riegels aufweist. Diese Sensoreinrichtung umfasst einen ersten Transponder, der an dem Riegel befestigt ist und durch den ein erstes Identifizierungssignal aussendbar ist. Die Sensoreinrichtung umfasst ferner einen zweiten Transponder, der an der Zuhaltung befestigt ist und durch den ein zweites Identifizierungssignal aussendbar ist. Schließlich weist die Sensoreinrichtung einen Abfragekopf auf, der derart gehäusefest gegenüber dem Riegel und der Zuhaltung angeordnet ist, dass er das erste und das zweite Identifizierungssignal nur dann sowohl von dem ersten als auch von dem zweiten Transponder empfangen kann, wenn sich der Riegel in seiner Schließstellung befindet und durch die Zuhaltung arretiert ist.

Die JP 2004 156 312 offenbart einen Türverschluss mit einem in einer Tür angeordneten Riegel, welcher insbesondere manuell über eine Türklinke bewegbar ist. In einem korrespondierenden Türrahmen ist eine Aufnahme zur Aufnahme des vorgenannten Riegels vorgesehen. Weiter ist an dem Türrahmen zugewandten Ende des Riegels ein Detektionsobjekt angeordnet. In dem Türrahmen ist überdies ein Näherungssensor derart axial zu dem Detektionsobjekt angeordnet, dass bei vollständiger Aufnahme des Riegels in der Aufnahme der Näherungssensor und das Detektionsobjekt in hier nächstmöglicher Nähe nebeneinander liegen. Ist dies der Fall, so informiert ein Verschlusssignal über den geschlossenen Zustand der Tür.

Die WO 2014/016281 A1 offenbart eine Zugangsschutzvorrichtung mit einem verschließbaren Teil, welcher eine Öffnung aufweist, und einem verschließenden Teil, welcher einen Riegel aufweist. Der Riegel ist zwischen einer Verriegelungsposition, in welcher der Riegel in die Öffnung hineinragt und einer Entriegelungsposition, in welcher der Riegel aus der Öffnung herausgezogen ist, bewegbar. An dem Riegel ist ein Magnetfeldsensor vorgesehen und in der Öffnung wiederum ein Magnetfeldgeber. So kann über den Magnetfeldsensor auf die Position des Riegels relativ zu dem Magnetfeldgeber im Bereich der Öffnung geschlossen werden. Liegen der Magnetfeldsensor und der Magnetfeldgeber nächstmöglich nebeneinander, so ist die Verriegelungsposition erreicht, welche mit Hilfe einer Überwachungsvorrichtung erkannt und überwacht werden kann.

Es kann als Aufgabe der Erfindung angesehen werden, eine Zuhaltung vorzuschlagen, bei der mit geringem Aufwand an Bauteilen eine sehr sichere und genauere Erfassung des geschlossenen Zustandes einer Zuhaltung ermöglicht wird.

Die Aufgabe wird gelöst durch eine Zuhaltung gemäß Anspruch 1, eine Sicherheitseinrichtung gemäß Anspruch 10 und ein Verfahren gemäß Anspruch 11. Abhängige Ansprüche beziehen sich auf vorteilhafte Ausführungsformen der Erfindung.

Die erfindungsgemäße Zuhaltung umfasst mindestens ein beweglich angeordnetes Bolzenelement. Das Bolzenelement kann auf verschiedene Weise beweglich sein, bspw. rotatorisch oder translatorisch entlang einer linearen oder auch bogenförmigen Bahn etc. Die Bewegung des Bolzenelements ist dabei bevorzugt geführt.

Eine Position des Bolzenelements, in der dieses in einer Aufnahme aufgenommen ist, wird hier als Zuhalteposition bezeichnet. In der Zuhalteposition ist die Zuhaltung durch den zwischen dem Bolzenelement und der Aufnahme gebildeten Eingriff geschlossen, so dass bspw. eine trennende Sicherheitseinrichtung, an der die Zuhaltung angeordnet ist, den Zugang zu einem Gefahrenbereich versperrt. Eine weitere Position, die das Bolzenelement in seiner Bewegung einnehmen kann, wird als Öffnungsposition bezeichnet. In der Öffnungsposition sind Bolzenelement und Aufnahmeposition nicht im Eingriff, so dass z. B. eine Schutzeinrichtung geöffnet werden kann, um Zugang zu einem Gefahrenbereich zu ermöglichen. Bevorzugt kann das Bolzenelement neben der Zuhalteposition und der Öffnungsposition weitere Positionen einnehmen, bspw. Zwischenstellungen.

Bei der Aufnahme kann es sich bspw. um jede Form einer Öffnung, Vertiefung, Bohrung, etc. handeln, die zur Aufnahme mindestens eines Teils des Bolzenelements und zur Schaffung eines verriegelnden Eingriffs mit diesem geeignet ist. Bevorzugt umgibt die Aufnahme in der Zuhalteposition das Bolzenelement mindestens zu einer Richtung, weiter bevorzugt zu allen Richtungen quer zur Bewegungsrichtung des Bolzenelements. So kann durch Eingriff des Bolzenelements in die Aufnahme die gewünschte Sperrwirkung hergestellt werden.

Erfindungsgemäß ist an der Zuhaltung eine mit einem Schwingkreis verbundene Signalschaltung vorgesehen. Die Signalschaltung ist dabei so ausgelegt, dass sie bei resonanter Anregung des Schwingkreises mit einer Freigabefrequenz ein Freigabesignal ausgibt. Der Schwingkreis wird bevorzugt durch mindestens eine Induktivität und eine Kapazität gebildet, bspw. in Reihen- oder Parallelschaltung, wobei allerdings auch zusätzliche Bauelemente und insbesondere zusätzliche Kapazitäten und/ oder Induktivitäten vorgesehen sein können.

Die Signalschaltung ist an den Schwingkreis bevorzugt so angeschlossen, dass ein dort fließender Strom bzw. eine dort anliegende Spannung abgegriffen werden kann. Die Signalschaltung kann so bspw. Amplitude und/oder Frequenz der Schwingung des Schwingkreises erfassen sowie weiter bevorzugt elektrische Leistung aus dem Schwingkreis entnehmen und bspw. für den Betrieb der Signalschaltung verwenden, z. B. unter Zwischenspeicherung in einer Kapazität.

Ein Freigabesignal wird von der Signalschaltung dabei erfindungsgemäß nur abgegeben, wenn eine resonante Anregung des Schwingkreises mit einer festgelegten Freigabefrequenz erfolgt, wobei die Freigabefrequenz auch als ein relativ eng definiertes Frequenzintervall verstanden werden kann. Das Freigabesignal kann drahtgebunden oder drahtlos übermittelt werden, bspw. als elektrisches Strom- oder Spannungssignal, als moduliertes elektrisches oder magnetisches Feld oder als elektromagnetische Welle. Eine bevorzugte Ausführungsform der Signalschaltung ist eine bekannte RFID-Schaltung, die die vom Schwingkreis gelieferte elektrische Energie zum Betrieb nutzt und bevorzugt das Freigabesignal als elektromagnetisches Signal liefert.

Erfindungsgemäß weist der Schwingkreis mindestens ein an der Aufnahme angeordnetes induktives Bauteil auf, bevorzugt eine Spule mit zumindest einer Windung, bevorzugt mit mehreren Windungen. Das Bolzenelement weist mindestens ein ferromagnetisches Teil auf, wobei darunter auch verstanden wird, dass das Bolzenelement ganz oder mindestens zum Teil aus ferromagnetischem Material bestehen kann. Besonders bevorzugt ist die Ausbildung mindestens eines zur Anordnung innerhalb der Aufnahme vorgesehenen Kopfbereiches des Bolzenelements aus einem eisenhaltigen Metall, bspw. aus Stahl.

Das ferromagnetische Teil des Bolzenelements (oder: das mindestens zum Teil ferromagnetisch ausgebildete Bolzenelement) und das induktive Bauteil an der Aufnahme sind erfindungsgemäß in den beiden Positionen so angeordnet, dass sich die Resonanzfrequenz des Schwingkreises abhängig von der Position des Bolzenelements ändert. Dabei sind Auslegung und Positionierung der Bauelemente so abgestimmt, dass in der Zuhalteposition eine Resonanzfrequenz des Schwingkreises der Freigabefrequenz zumindest im Wesentlichen entspricht und sich in der Öffnungsposition die Resonanzfrequenz des Schwingkreises von der Freigabefrequenz unterscheidet.

Auf diese Weise kann die Signalschaltung mit dem Schwingkreis als Sensor für die Stellung des Bolzenelements dienen und insbesondere zur Feststellung, ob das Bolzenelement in der Aufnahme aufgenommen ist (Zuhalteposition) oder nicht.

So ist eine sehr genaue, störungs- und manipulationssichere Erkennung der Zuhalteposition möglich, so dass ausgehend von dem Freigabesignal in einer Sicherheitseinrichtung eine Steuerung einer Maschine oder Anlage zum sicheren Betrieb erreicht werden kann.

Erfindungsgemäß ist das induktive Bauteil als Spule ausgebildet, von der zumindest eine Windung so an der Aufnahme angeordnet ist, dass das ferromagnetische Teil am Bolzenelement in der Zuhalteposition innerhalb der Windung angeordnet ist, also einen Spulenkern bildet. Hierdurch kann bspw. der Induktivitätswert des induktiven Bauteils und somit die Resonanzfrequenz des Schwingkreises abhängig von der Bolzenposition deutlich geändert werden. Dabei ist z.B. eine hohe Positionsgenauigkeit erzielbar, wobei bereits eine Positionsänderung des Bolzenelements um einen Millimeter sicher detektierbar sein kann.

Besonders bevorzugt kann die Anregung des Schwingkreises drahtlos erfolgen, also durch wechselnde elektrische oder magnetische Felder bzw. elektromagnetische Wellen. Ebenso ist es bevorzugt, dass auch das Freigabesignal drahtlos übermittelt wird. Besonders bevorzugt kann so der Teil der Zuhaltung, an den die Aufnahme angeordnet ist, ohne kabelgebundene externe Verbindungen ausgestaltet sein, sodass es sich besonders zur Anordnung am beweglichen Teil einer trennenden Schutzeinrichtung, bspw. einer Tür, eignet. Die drahtlose Anregung des Schwingkreises sowie der drahtlose Empfang des Freigabesignals können bevorzugt von einer geeigneten Einrichtung an einem zweiten, festen Teil der Zuhaltung vorgesehen sein, der bspw. auch eine Führung für das Bolzenelement aufweisen kann. Dieser Teil ist gut geeignet zur Anordnung an einem feststehenden Teil einer trennenden Sicherheitseinrichtung, bspw. an einem Türanschlag, Rahmen, etc. und kann bspw. einen Kabelanschluss für Signalübertragung und/oder elektrische Leistungsversorgung aufweisen.

In einer bevorzugten Ausführungsform kann die Zuhaltung neben einem ersten Bolzenelement und einer ersten Aufnahme wie zuvor beschrieben zusätzlich auch ein zweites Bolzenelement und eine zweite Aufnahme aufweisen, wobei beide Bolzenelemente beweglich sind zwischen jeweiligen Zuhaltepositionen, bei denen die Bolzenelemente in den jeweils zugeordneten Aufnahmen aufgenommen sind und Öffnungspositionen, in denen die Bolzenelemente und die Aufnahmen nicht im Eingriff stehen. Beispielsweise können die Bolzenelemente gegenläufig zur Verriegelung in entgegengesetzte Richtungen beweglich angeordnet sein. Für eine Zuhaltung mit zwei Bolzenelementen weist bevorzugt auch das zweite Bolzenelement mindestens ein ferromagnetisches Teil auf und auch an der zweiten Aufnahme ist ein zweites induktives Bauteil angeordnet. So kann in gleicher Weise wie oben für ein Bolzenelement und eine Aufnahme erläutert die Aufnahme beider Bolzenelemente in den jeweils zugeordneten Aufnahmen detektiert und nur in diesem Fall ein Freigabesignal abgegeben werden. Möglich ist dabei ein elektrischer Kontakt zwischen den induktiven Bauteilen in einer gemeinsamen Schaltung, bspw. als Reihen- oder Parallelschaltung zur Bildung eines gemeinsamen Schwingkreises. Ebenso können aber auch separate Schwingkreise gebildet sein, die entweder an eine gemeinsame Signalschaltung oder an voneinander getrennte Signalschaltungen angeschlossen sind.

Nachfolgend werden Ausführungsformen der Erfindung anhand von Zeichnungen näher beschrieben. Dabei zeigen:
- Figur 1: eine schematische perspektivische Darstellung einer Sicherheitseinrichtung mit einer Zuhaltung an einer trennenden Schutzeinrichtung;
- Figur 2: eine schematische Darstellung von Elementen der Zuhaltung aus Figur 1;
- Figur 3: eine perspektivische Darstellung einer Ausführungsform von Elementen der Zuhaltung aus Figur 1, Figur 2;
- Figur 4: eine perspektivische Darstellung von Elementen der Zuhaltung aus Figur 3;
- Figur 5: eine Schnittansicht von Elementen der Zuhaltung aus Figur 4 mit schematisch gezeigten angeschlossenen Bauelementen.

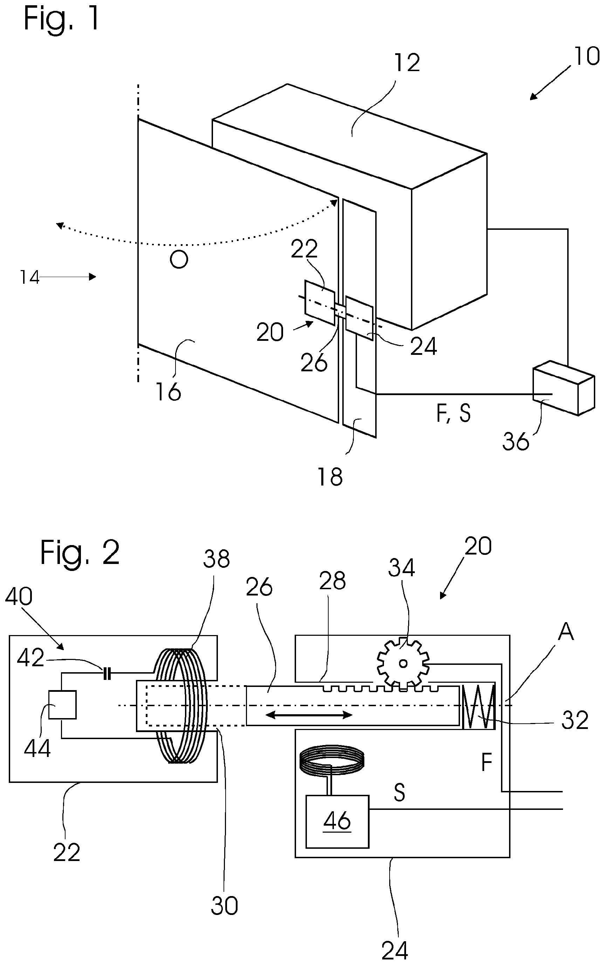

Figur 1 zeigt eine Sicherheitseinrichtung 10 für eine lediglich schematisch dargestellte Maschine oder Anlage 12. Der Zugang zu der Maschine oder Anlage 12 ist durch eine trennende Schutzeinrichtung 14 versperrt, die als beweglichen Teil eine Tür 16 und als feststehenden Teil ein Anschlag- oder Rahmenelement 18 aufweist. Die beiden Teile 16, 18 der beweglich trennenden Schutzeinrichtung 14 sind mit einer Zuhaltung 20 versehen, die im geschlossenen Zustand die Öffnung der Tür 16 sperrt und im geöffneten Zustand freigibt

Die Zuhaltung 20 umfasst ein am beweglichen Teil 16 geordnetes Betätigerteil 22 und ein am festen Teil 18 angeordnetes Zuhaltungsteil 24, die in der beispielhaft gezeigten Ausführung verbunden sind durch ein bewegliches Bolzenelement 26.

Während das Betätigerteil 22 der Zuhaltung 20 autonom ausgebildet ist, d. h. keine kabelgebundenen elektrischen Anschlüsse aufweist, ist das Zuhaltungsteil 24 über eine Kabelverbindung gekoppelt mit einer Steuerung 36 der Maschine oder Anlage 12. Über die Kabelverbindung wird bei geschlossener Zuhaltung 20 ein Freigabesignal F übermittelt, das der Maschinensteuerung signalisiert, dass die Schutzeinrichtung 14 geschlossen ist und somit ein Betrieb der Maschine oder Anlage 12 ohne Bedenken möglich ist. Weiter kann von der Steuerung 36 über die Kabelverbindung ein Steuersignal S an die Zuhaltung 20 übermittelt werden, um diese während des Betriebs der Maschine 12 in der geschlossenen Stellung zu verriegeln.

Figur 2 zeigt schematisch den Aufbau einer beispielhaften Ausführung der Zuhaltung 20.

Im Zuhaltungsteil 24 ist das Bolzenelement 26 in einer Führung 28 geführt, im gezeigten Beispiel zur linearen Bewegung entlang einer Achse A. Durch Verschiebung entlang der Achse A kann das Bolzenelement 26 zwischen einer in Figur 2 mit durchgezogenen Linien dargestellten Öffnungsposition und einer gestrichelt dargestellten Zuhalteposition verschoben werden.

Das Betätigerteil weist als Aufnahme 30 einen Hohlraum auf, in den das Bolzenelement 26 im geschlossenen Zustand der Zuhaltung 20 eingreift, so dass Betätigerteil 22 und Zuhaltungsteil 24 in Öffnungsrichtung O des beweglichen Teils 16 (Figur 1) gegeneinander gesperrt sind.

Das Zuhaltungsteil 24 weist zur Bewegung des Bolzenelements 26 ein Federelement 32 sowie ein Verriegelungselement 34 auf, die in Figur 2 lediglich schematisch gezeigt sind. Durch das Federelement 32 wird das Bolzenelement 26 in Richtung der Zuhalteposition beaufschlagt. Das Verriegelungselement 34 ist mittels des Steuerungssignals S durch die Steuervorrichtung 36 ansteuerbar und kann bei entsprechender Ansteuerung das Bolzelement 26 in der Zuhalteposition verriegeln oder in alternativen Ausführungen als Antriebselement auch aktiv das Bolzelement 26 von der Öffnungsposition in die Zuhalteposition oder in umgekehrter Richtung bewegen.

Am Betätigerteil 22 ist um die Aufnahme 30 herum eine Spule 38 angeordnet. Die Spule 38 ist mit einer Kapazität 42 zu einem Schwingkreis 40 verschaltet, der an einen RFID-Chip 44 angeschlossen ist.

Der RFID-Chip 44 arbeitet auf an sich bekannte Weise so, dass bei einer resonanten Anregung des Schwingkreises 40 durch eine elektromagnetische Quelle dem Schwingkreis 40 elektrische Leistung entnommen und zum Betrieb des RFID-Chips 44 genutzt wird. Im Betrieb wird ein für die Spule 38 induktiv empfangenes Anregungssignal erkannt und ein Antwortsignal darauf über den Schwingkreis 40 abgegeben.

Dabei ist der RFID-Chip 44 so ausgebildet, dass er nur bei resonanter Anregung des Schwingkreises 40 mit einer festgelegten Freigabefrequenz das Antwortsignal abgibt. Bei einer Anregung mit abweichender Frequenz gibt der RFID Chip 44 kein Antwortsignal aus. Das Bolzenelement 26 besteht aus ferromagnetischem Material, so dass es einen Spulenkern für die Spule 38 bildet. Die Induktivität der Spule 38 erhöht sich somit in der Zuhalteposition, in der das Bolzenelement 26 als Kern im inneren der Spule 38 aufgenommen ist gegenüber der Öffnungsposition, in der sich das Bolzenelement 26 außerhalb der Aufnahme 30 und damit auch außerhalb der Spule 38 befindet.

Durch die unterschiedliche Induktivität der Spule 38 in Zuhalte- und Öffnungsposition ergeben sich positionsabhängig unterschiedliche Resonanzfrequenzen des Schwingkreises 40. Dabei sind die Bauelemente in Auslegung und Anordnung so abgestimmt, dass nur in der Zuhalteposition die Resonanzfrequenz des Schwingkreises 40 der vom RFID-Chip 44 benötigten Freigabefrequenz entspricht. Kommt es hingegen zu einer Anregung des Schwingkreises 40 in der Öffnungsposition, so wird der Schwingkreis 40 auf einer anderen Frequenz schwingen, die nicht zum Betrieb des RFID-Chips 44 und nicht zur Ausgabe eines Antwortsignals auf ein Abfragesignal führt.

Für die Anregung des Schwingkreises 40 mit der Freigabefrequenz und für das Aussenden eines Abfragesignals sowie im Erfolgsfall den Empfang des Antwortsignals ist im Zuhaltungsteil 24 ein RFID-Transceiver 46 vorgesehen.

Der RFID-Transceiver 46, Schwingkreis 40 und RFID-Chip 44 bilden somit einen hochgenauen, störungs- und manipulationssicheren Sensor für die Anordnung des Bolzenelements 26 in der Zuhalteposition. Bei Empfang eines Antwortsignals des RFID-Chips 44 am RFID-Transceiver 46 ist sichergestellt, dass sich das Bolzenelement 26 innerhalb der Aufnahme 30 befindet und die Zuhaltung 20 somit geschlossen ist. Dann kann das Freigabesignal F zum Betrieb der Maschine oder Anlage 12 abgegeben werden.

Ein sicherer Betrieb der Maschine oder Anlage 12 wird sichergestellt durch die Steuervorrichtung 36, die das Steuersignal S für das Antriebs- bzw. Verriegelungselement 34 ausgibt und das Freigabesignal F vom RFID-Transceiver 46 empfängt. Nur bei Empfang des Freigabesignals F an der Steuereinrichtung 36 gibt diese den Betrieb der Maschine bzw. Anlage 12 frei. Während des Betriebs verriegelt die Steuereinrichtung 36 mittels des Verriegelungselements 34 das Bolzenelement 26 in der Zuhalteposition. Bei Signalisierung eines Öffnungswunsches, bspw. durch ein Bedienelement an der Zuhaltung 20 (nicht dargestellt) schaltet die Steuereinrichtung 36 die Anlage 12 ab, bevor sie durch das Steuersignal S das Verrieglungselement 34 zur Freigabe der Bewegung des Bolzenelements 26 ansteuert. Falls während des Betriebs das Freigabesignal F ausbleibt, stoppt die Steuereinrichtung 36 die Anlage 12.

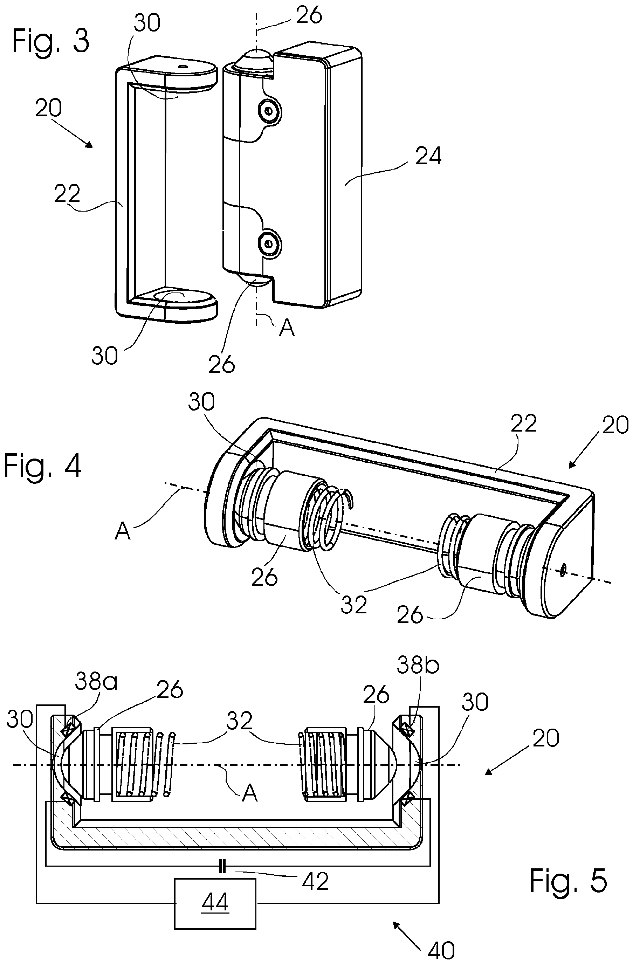

In Figur 3-5 ist eine bevorzugte, konkrete Ausführungsform einer Zuhaltung 20 mit Betätigerteil 22 und Zuhaltungsteil 24 näher gezeigt. Am Zuhaltungsteil 24 sind zwei Bolzenelemente 26 entlang einer gemeinsamen Bewegungsachse A verschiebbar angeordnet, so dass sie in der ausgefahrenen Zuhalteposition in Aufnahmen 30 am Betätigerelement 22 aufgenommen sind.

Wie in Figur 4 gezeigt sind die Bolzenelemente 26 durch Federn 32 in Richtung der Zuhalteposition beaufschlagt. In der Zuhalteposition können die Bolzenelemente 26 durch ein Verriegelungselement (nicht dargestellt) verriegelt werden, so dass die Zuhaltung 20 dann sicher in der geschlossenen Stellung gehalten werden kann, in der die Bolzenelemente 26 beidseitig in den Aufnahmen 30 am Betätigerelement 22 aufgenommen sind.

Wie aus der Schnittansicht in Figur 5 ersichtlich sind an den muldenförmigen Aufnahmen 30 Spulen 38a, 38b so vorgesehen, dass die aus ferromagnetischem Material (Stahl) bestehenden Köpfe der Bolzenelemente 26 in der Zuhalteposition (in Figur 5 links gezeigt) im Inneren der Spule 38 und in der Öffnungsposition (in Figur 5 rechts gezeigt) außerhalb der Spule 38b positioniert sind.

Die in Figur 3-5 gezeigte Ausführungsform der Zuhaltungsform 20 umfasst wie erläutert zwei Bolzenelemente 26 und zwei Aufnahmen 30, die jeweils mit Spulen 38a, 38b versehen sind. Die Zuordnung 20 ist nur dann sicher verschlossen, wenn beide Bolzenelemente 26 in den jeweiligen Aufnahmen 30 angeordnet sind. Um dies zu überwachen sind in der beispielhaft dargestellten Ausführung die Spulen 38a, 38b in Reihe geschaltet und bilden gemeinsam mit der Kapazität 42 den an den RFID-Chip 44 angeschlossenen Schwingkreis 40. Dabei sind die Bauelemente und ihre jeweilige Anordnung so abgestimmt, dass der gemeinsame Induktivitätswert der Spulen 38a, 38b mit darin als Spulenkern angeordneten Bolzenelementen 26 in Verbindung mit dem Kapazitätswert der Kapazität 42 zu einer Resonanzfrequenz des Schwingkreises 40 führt, die der Freigabefrequenz des RFID-Chip 44 entspricht.

Es ist darauf hinzuweisen, dass es sich bei den gezeigten Ausführungsformen um beispielhafte Realisierungen der Erfindung handelt, diese allerdings nicht auf diese konkreten Ausführungen beschränkt ist. Das im Zusammenhang mit Figur 1 und Figur 2 erläuterte Prinzip lässt sich auf viele verschiedene Weisen umsetzen. Insbesondere können verschiedene Arten und Formen von Bolzenelementen in unterschiedlicher Anzahl vorgesehen sein und sich statt wie beispielhaft gezeigt linear entlang einer Achse A auch auf andere Weise bewegen, bspw. rotatorisch.

Eine Verriegelung des Bolzenelements 26 in der Zuhalteposition kann ebenso auf verschiedenste Weise ansteuerbar realisiert werden, bspw. durch einen Elektromotor, Hubmagneten, etc.

Für Zuhaltungen mit mehreren Bolzenelementen 26 wie beispielhaft gezeigt in Figur 3-5 kann die sichere Aufnahme aller Bolzenelemente 26 in den jeweiligen Aufnahmen 30 statt wie beispielhaft gezeigt durch einen gemeinsamen Schwingkreis 40 auch durch jeweils separate Schwingkreise erfasst werden, wobei diese gemeinsam an einen RFID-Chip 44 oder an separate RFID-Chips angeschlossen sein können.

## Patentansprüche

1. Zuhaltung, mit
- mindestens einem Bolzenelement (26), das beweglich ist zumindest zwischen einer Zuhalteposition und einer Öffnungsposition, wobei das Bolzenelement (26) in der Zuhalteposition in einer Aufnahme (30) aufgenommen ist,
- wobei eine mit einem Schwingkreis (40) verbundene Signalschaltung (44) vorgesehen ist, die bei resonanter Anregung des Schwingkreises (40) mit einer Freigabefrequenz ein Freigabesignal ausgibt,
- wobei der Schwingkreis (40) mindestens ein an der Aufnahme (30) angeordnetes induktives Bauteil (38), und das Bolzenelement (26) mindestens ein ferromagnetisches Teil aufweist,
- wobei in der Zuhalteposition das Bolzenelement (26) mit dem ferromagnetischen Teil relativ zu dem induktiven Bauteil (38) so angeordnet ist, dass eine Resonanzfrequenz des Schwingkreises (40) der Freigabefrequenz entspricht,
- und in der Öffnungsposition das Bolzenelement (26) mit dem ferromagnetischen Teil relativ zu dem induktiven Bauteil (38) so angeordnet ist, dass sich die Resonanzfrequenz des Schwingkreises (40) von der Freigabefrequenz unterscheidet,
**dadurch gekennzeichnet, dass** das induktive Bauteil (38) eine Spule mit zumindest einer Windung ist, wobei die Windung so an der Aufnahme (30) angeordnet ist, dass das ferromagnetische Teil (26) in der Zuhalteposition innerhalb der Windung angeordnet ist.

2. Zuhaltung gemäß Anspruch 1, bei der
- das Bolzenelement (26) mindestens zum Teil aus einem Metall gebildet ist.

3. Zuhaltung gemäß einem der vorangehenden Ansprüche, bei der
- die Anregung drahtlos erfolgt.

4. Zuhaltung gemäß einem der vorangehenden Ansprüche, bei der
- die Signalschaltung (44) dazu ausgebildet ist, das Freigabesignal drahtlos zu übermitteln.

5. Zuhaltung gemäß einem der vorangehenden Ansprüche, bei der
- eine Abfrageschaltung (46) vorgesehen ist zur elektromagnetischen Anregung des Schwingkreises (40) und zum Empfang des Freigabesignals.

6. Zuhaltung gemäß einem der vorangehenden Ansprüche, bei der
- die Signalschaltung (44) eine RFID-Schaltung ist, die bei resonanter Anregung mit der Freigabefrequenz vom Schwingkreis (40) gelieferte elektrische Energie zum Betrieb nutzt.

7. Zuhaltung gemäß einem der vorangehenden Ansprüche, bei der
- das Bolzenelement (26) entlang einer Bewegungsrichtung (A) verschiebbar angeordnet ist,
- und die Aufnahme (30) in der Zuhalteposition das Bolzenelement (26) in einer quer zur Bewegungsrichtung (A) angeordneten Querrichtung umgibt.

8. Zuhaltung gemäß einem der vorangehenden Ansprüche, bei der
- das Bolzenelement (26) ein erstes Bolzenelement und die Aufnahme (30) eine erste Aufnahme ist
- und ein zweites Bolzenelement (26) vorgesehen ist, das beweglich ist zwischen einer Zuhalteposition und einer Öffnungsposition, wobei das zweite Bolzenelement (26) in der Zuhalteposition in einer zweiten Aufnahme (30) aufgenommen ist,
- wobei das zweite Bolzenelement (26) mindestens ein zweites ferromagnetisches Teil aufweist und an der zweiten Aufnahme ein zweites induktives Bauteil (38b) angeordnet ist.

9. Zuhaltung gemäß einem der vorangehenden Ansprüche, bei der
- ein Aktor (34) zur ansteuerbaren Verriegelung und/oder Bewegung des Bolzenelements (26) vorgesehen ist.

10. Sicherheitseinrichtung mit einer Zuhaltung (20) gemäß einem der vorangehenden Ansprüche, mit
- einem beweglichen Teil (16) und einem festen Teil (18) einer trennenden Schutzeinrichtung (14), wobei das Bolzenelement (20) an einem der Teile beweglich geführt angeordnet und die Aufnahme (30) am anderen Teil (22) der Schutzeinrichtung angeordnet ist,
- wobei die trennende Schutzeinrichtung (14) angeordnet ist, um den Zugang zu einer Maschine oder Anlage (12) zu blockieren,
- und wobei eine Steuerung für die Maschine oder Anlage (12) zum Empfang des Freigabesignals (F) mit der Zuhaltung (20) verbunden ist.

11. Verfahren zum Betrieb einer Zuhaltung (20), bei dem
- ein Bolzenelement (26) beweglich ist zumindest zwischen einer Zuhalteposition, in der das Bolzenelement (26) in einer Aufnahme (30) aufgenommen ist und einer Öffnungsposition,
- und ein mit einer Signalschaltung verbundener Schwingkreis (40) elektromagnetisch angeregt wird, wobei der Schwingkreis (40) ein an der Aufnahme angeordnetes induktives Bauteil (38) aufweist, und das Bolzenelement (26) zumindest ein ferromagnetisches Teil aufweist,
- wobei das induktive Bauteil (38) eine Spule mit zumindest einer Windung ist, wobei die Windung so an der Aufnahme (30) angeordnet ist, dass das ferromagnetische Teil in der Zuhalteposition innerhalb der Windung angeordnet ist,
- und eine mit dem Schwingkreis (40) verbundene Signalschaltung (44) bei resonanter Anregung des Schwingkreises (40) mit einer Freigabefrequenz ein Freigabesignal ausgibt,
- wobei in der Zuhalteposition das Bolzenelement (26) mit dem ferromagnetischen Teil relativ zu dem induktiven Bauteil (38) so angeordnet ist, dass eine Resonanzfrequenz des Schwingkreises (40) der Freigabefrequenz entspricht,
- und in der Öffnungsposition das Bolzenelement (26) mit dem ferromagnetischen Teil relativ zu dem induktiven Bauteil (38) so angeordnet ist, dass sich die Resonanzfrequenz des Schwingkreises (40) von der Freigabefrequenz unterscheidet.

## Claims

1. An interlock, having
- at least one bolt element (26) which is movable at least between an interlock position and an opening position, wherein the bolt element (26) is received in a receptacle (30) in the interlock position,
- wherein a signal circuit (44) connected to a resonant circuit (40) is provided, which outputs an enable signal when the resonant circuit (40) is excited resonantly with an enable frequency,
- wherein the resonant circuit (40) has at least one inductive component (38) arranged on the receptacle (30), and the bolt element (26) has at least one ferromagnetic part,
- wherein, in the interlock position, the bolt element (26) having the ferromagnetic part is arranged relative to the inductive component (38) such that a resonance frequency of the resonant circuit (40) corresponds to the enable frequency,
- and, in the opening position, the bolt element (26) having the ferromagnetic part is arranged relative to the inductive component (38) such that the resonance frequency of the resonant circuit (40) differs from the enable frequency, **characterized in that** the inductive component (38) is a coil having at least one winding, wherein the winding is arranged on the receptacle (30) such that the ferromagnetic part (26) is arranged within the winding in the interlock position.

2. The interlock according to claim 1, in which
- the bolt element (26) is at least partly formed from a metal.

3. The interlock according to one of the preceding claims, in which
- the excitation is effected wirelessly.

4. The interlock according to one of the preceding claims, in which
- the signal circuit (44) is configured to transmit the enable signal wirelessly.

5. The interlock according to one of the preceding claims, in which
- an interrogation circuit (46) is provided in order to electromagnetically excite the resonant circuit (40) and to receive the enable signal.

6. The interlock according to one of the preceding claims, in which
- the signal circuit (44) is an RFID circuit which, when it is resonantly excited with the enable frequency, utilizes electrical energy supplied by the resonant circuit (40) for operation.

7. The interlock according to one of the preceding claims, in which
- the bolt element (26) is displaceably arranged along a direction of movement (A),
- and the receptacle (30) surrounds the bolt element (26) in a transverse direction arranged transversely to the direction of movement (A) in the interlock position.

8. The interlock according to one of the preceding claims, in which
- the bolt element (26) is a first bolt element and the receptacle (30) is a first receptacle,
- and a second bolt element (26) is provided, which is movable between an interlock position and an opening position, wherein the second bolt element (26) is received in a second receptacle (30) in the interlock position,
- wherein the second bolt element (26) has at least one second ferromagnetic part, and a second inductive component (38b) is arranged on the second receptacle.

9. The interlock according to one of the preceding claims, in which
- an actuator (34) is provided for the actuatable locking and/or movement of the bolt element (26).

10. A safety device having an interlock (20) according to one of the preceding claims, having
- a movable part (16) and a fixed part (18) of a separating protective device (14), wherein the bolt element (20) is arranged in a movably guided manner on one of the parts and the receptacle (30) is arranged on the other part (22) of the protective device,
- wherein the separating protective device (14) is arranged in order to block access to a machine or plant (12),
- and wherein a control system for the machine or plant (12) is connected to the interlock (20) in order to receive the enable signal (F).

11. A method for operating an interlock (20), in which
- a bolt element (26) is movable at least between an interlock position, in which the bolt element (26) is received in a receptacle (30), and an opening position,
- and a resonant circuit (40) connected to a signal circuit is electromagnetically excited, wherein the resonant circuit (40) has an inductive component (38) arranged on the receptacle, and the bolt element (26) has at least one ferromagnetic part,
- wherein the inductive component (38) is a coil having at least one winding, wherein the winding is arranged on the receptacle (30) such that the ferromagnetic part is arranged within the winding in the interlock position,
- and a signal circuit (44) connected to the resonant circuit (40) outputs an enable signal when the resonant circuit (40) is resonantly excited with an enable frequency,
- wherein, in the interlock position, the bolt element (26) having the ferromagnetic part is arranged relative to the inductive component (38) such that a resonance frequency of the resonant circuit (40) corresponds to the enable frequency,
- and, in the opening position, the bolt element (26) having the ferromagnetic part is arranged relative to the inductive component (38) such that the resonance frequency of the resonant circuit (40) differs from the enable frequency.

## Revendications

1. Gâchette avec
- au moins un élément de boulon (26), qui est mobile au moins entre une position de fermeture et une position d'ouverture, dans laquelle l'élément de boulon (26) est placé à l'intérieur d'un logement (30) dans la position de fermeture,
- dans laquelle un circuit de signal (44) relié à un circuit oscillant (40) est prévu, lequel émet un signal de déblocage en cas d'excitation résonante du circuit oscillant (40) avec une fréquence de déblocage,
- dans laquelle le circuit oscillant (40) présente au moins un composant inductif (38) disposé sur le logement (30) et l'élément de boulon (26) comporte au moins une pièce ferromagnétique,
- dans laquelle l'élément de boulon (26) doté de la pièce ferromagnétique est disposé par rapport au composant inductif (38) dans la position de fermeture de sorte qu'une fréquence de résonance du circuit oscillant (40) correspond à la fréquence de déblocage,
- et l'élément de boulon (26) doté de la pièce ferromagnétique est disposé par rapport au composant inductif (38) dans la position d'ouverture de sorte que la fréquence de résonance du circuit oscillant (40) se différencie de la fréquence de déblocage,
**caractérisée en ce que** le composant inductif (38) est une bobine dotée d'au moins un enroulement, dans laquelle l'enroulement est disposé sur le logement (30) de sorte que la pièce ferromagnétique (26) est disposée à l'intérieur de l'enroulement dans la position de fermeture.

2. Gâchette selon la revendication 1, dans laquelle
l'élément de boulon (26) est constitué au moins en partie d'un métal.

3. Gâchette selon l'une des revendications précédentes, dans laquelle l'excitation s'effectue sans fil.

4. Gâchette selon l'une des revendications précédentes, dans laquelle
- le circuit de signal (44) est conçu de manière à ce que le signal de déblocage soit transmis sans fil.

5. Gâchette selon l'une des revendications précédentes, dans laquelle
- un circuit d'interrogation (46) est prévu pour l'excitation électromagnétique du circuit oscillant (40) et pour la réception du signal de déblocage.

6. Gâchette selon l'une des revendications précédentes, dans laquelle
- le circuit de signal (44) est un circuit de radio-identification RFID, qui exploite l'énergie électrique fournie par le circuit oscillant (40) pour le fonctionnement en cas d'excitation résonante avec la fréquence de déblocage.

7. Gâchette selon l'une des revendications précédentes, dans laquelle
- l'élément de boulon (26) est disposé afin de pouvoir être déplacé dans la direction du mouvement (A),
- et le logement (30) entoure l'élément de boulon (26) dans une direction transversale disposée transversalement par rapport à la direction du mouvement (A) en position de fermeture.

8. Gâchette selon l'une des revendications précédentes, dans laquelle
- l'élément de boulon (26) est un premier élément de boulon et le logement (30) est un premier logement,
- et un second élément de boulon (26) est prévu, qui est mobile entre une position de fermeture et une position d'ouverture, dans laquelle le second élément de boulon (26) est placé à l'intérieur d'un second logement (30) dans la position de fermeture
- dans laquelle le second élément de boulon (26) présente au moins une seconde pièce ferromagnétique et un second composant inductif (38b) est disposé sur le second logement.

9. Gâchette selon l'une des revendications précédentes, dans laquelle un actionneur (34) est prévu pour activer le verrouillage et/ou mouvoir l'élément de boulon (26).

10. Dispositif de sécurité avec une gâchette (20) selon l'une des revendications précédentes avec
- une pièce mobile (16) et une pièce fixe (18) d'un dispositif de protection séparateur (14), dans lequel l'élément de boulon (20) est disposé afin d'être guidé de façon mobile sur l'une des pièces et le logement (30) est disposé sur l'autre pièce (22) du dispositif de protection,
- dans lequel le dispositif de protection séparateur (14) est disposé pour bloquer l'accès à une machine ou installation (12),
- et dans lequel une commande de la machine ou l'installation (12) est reliée à la gâchette (20) pour recevoir le signal de déblocage (F).

11. Procédé pour faire fonctionner une gâchette (20), dans lequel
- un élément de boulon (26) est mobile au moins entre une position de fermeture, dans laquelle l'élément de boulon (26) est placé à l'intérieur d'un logement (30), et une position d'ouverture
- et un circuit oscillant (40) relié à un circuit de signal est excité par voie électromagnétique, dans lequel le circuit oscillant (40) présente un composant inductif (38) disposé sur le logement et l'élément de boulon (26) comporte au moins une pièce ferromagnétique,
- et dans lequel le composant inductif (38) est une bobine dotée d'au moins un enroulement, dans laquelle l'enroulement est disposé sur le logement (30) de sorte que la pièce ferromagnétique est disposée à l'intérieur de l'enroulement dans la position de fermeture,
- et un circuit de signal (44) relié au circuit oscillant (40) émet un signal de déblocage en cas d'excitation résonante du circuit oscillant (40) avec une fréquence de déblocage,
- dans lequel l'élément de boulon (26) doté de la pièce ferromagnétique est disposé par rapport au composant inductif (38) dans la position de fermeture de sorte qu'une fréquence de résonance du circuit oscillant (40) correspond à la fréquence de déblocage,
- et l'élément de boulon (26) doté de la pièce ferromagnétique est disposé par rapport au composant inductif (38) dans la position d'ouverture de sorte que la fréquence de résonance du circuit oscillant (40) se différencie de la fréquence de déblocage.
